Europäisches Patentamt

**European Patent Office**

Office européen des brevets

(11) Veröffentlichungsnummer: **0 002 768**
**B1**

(12) **EUROPÄISCHE PATENTSCHRIFT**

(45) Veröffentlichungstag der Patentschrift: **26.01.83**

(21) Anmeldenummer: **78101741.3**

(22) Anmeldetag: **16.12.78**

(51) Int. Cl.³: **C 08 G 18/50,**
C 08 G 18/46, C 08 J 9/14

(54) **Verfahren zur Herstellung von formstabilen Polyurethanschaumstoffen aus lagerstabilen, tertiäre Aminogruppen enthaltenden, isocyanatgruppenhaltigen Präpolymeren.**

(30) Priorität: **24.12.77 DE 2758114**

(43) Veröffentlichungstag der Anmeldung:
**11.07.79 Patentblatt 79/14**

(45) Bekanntmachung des Hinweises auf die Patenterteilung:
**26.01.83 Patentblatt 83/4**

(84) Benannte Vertragsstaaten:
**BE CH DE FR GB NL**

(56) Entgegenhaltungen:
**DE - A - 1 922 626**
**DE - A - 2 045 852**
**FR - E - 79 641**
**US - A - 3 042 631**

(73) Patentinhaber: **BASF Aktiengesellschaft**
**Carl-Bosch-Strasse 38**
**D-6700 Ludwigshafen (DE)**

(72) Erfinder: **Horacek, Heinrich, Dr.**
**Londoner Ring 11**
**D-6700 Ludwigshafen (DE)**
Erfinder: **Gehm, Robert, Dr.**
**Mannheimer Strasse 45**
**D-6703 Limburgerhof (DE)**
Erfinder: **Volkert, Otto, Dr.**
**Im Eiertal 10**
**D-6719 Weisenheim/Berg (DE)**
Erfinder: **Chakrabarti, Sarbananda**
**Bruesseler Ring 45**
**D-6700 Ludwigshafen (DE)**
Erfinder: **Pauls, Mathias**
**Eichenstrasse 14a**
**D-8061 Lauterbach (DE)**
Erfinder: **Weyland, Peter, Dr.**
**Ludwigshafenerstrasse 12a**
**D-6710 Frankenthal (DE)**

Courier Press, Leamington Spa, England.

# 0 002 768

Verfahren zur Herstellung von formstabilen Polyurethanschaumstoffen aus lagerstabilen, tertiäre Aminogruppen enthaltenden, isocyanatgruppenhaltigen Präpolymeren

Die Erfindung betrifft ein Verfahren zur Herstellung von formstabilen Polyurethanschaumstoffen durch Entspannen und durch Umsetzung mit der Atmosphäre Aushärtenlassen eines lagerstabilen, unter Druck stehenden Gemisches aus isocyanatgruppenhaltigen Präpolymeren, Treibmittel und gegebenenfalls Hilfs- und Zusatzstoffen, wobei die isocyanatgruppenhaltigen Präpolymeren erhalten werden durch Umsetzung von organischen Polyisocyanaten mit tertiäre Aminogruppen in der Polymerkette gebunden enthaltenden di- bis octafunktionellen Polyester- und/oder Polyätherpolyolen oder vorzugsweise Mischungen aus solchen Polyester- und/oder Polyätherpolyolen und stickstofffreien Polyester- und/oder Polyätherpolyolen in bestimmten Mengenverhältnissen.

Polyurethanschaumstoffe werden üblicherweise nach dem Präpolymer- und vorzugsweise dem one shot-Verfahren hergestellt. Hierzu werden die Reaktanten, beispielsweise isocyanatgruppenhaltige Präpolymere oder Polyisocyanate und Polyole sowie Treibmittel, Katalysatoren und gegebenenfalls Hilfs- und Zusatzstoffe, in abgemessenen Mengen gesondert oder in Form von Gemischen einer Mischvorrichtung, beispielsweise einem Mischkopf, zugeführt, dort intensiv gemischt und über Abgabevorrichtungen in Formen oder zu füllende Hohlräume eingegossen, in denen die Mischung aufschäumt und aushärtet.

Es ist ferner bekannt, Polyurethanschaumstoffe aus sogenannten Zweikomponentensystemen herzustellen, wobei die Komponente A vorzugsweise das organische Polyol, den Katalysator, Treibmittel und Zusatzstoffe enthält und die Komponente B aus Polyisocyanaten und gegebenenfalls weiteren Hilfsmitteln besteht. Die zwei Komponenten werden getrennt in Mehr-, vorzugsweise Zweikammerbehältern, gelagert. Vor der Verarbeitung wird die Trennwand zwischen den Kammern zerstört, die Komponenten A und B gemischt und die schaumfähige Mischung verarbeitet.

Nach Angaben der DE—OS 16 29 495 können die Komponenten A und B getrennt in Aerosoldosen eingebracht, gelagert, durch eine geeignete Vorrichtung gemischt und als schaumfähige Mischung der Dose entnommen werden. Nachteilig an dem beschriebenen Verfahren ist die Verwendung eines teueren Mehrkammerbehälters mit Mischvorrichtung und, daß der gesamte Doseninhalt auf einmal verarbeitet werden muß, da die Mischung aus den Komponenten A und B nicht lagerfähig ist.

Die DE—OS 20 45 852 beschreibt ebenfalls die Herstellung von schaumfähigen Polyurethanmischungen, wobei jedoch die Mischung aus härtbarem Polymer oder einem Polymervorprodukt und einem im Polymeren löslichen interten Treibmittel in einem Behälter enthalten sind, aus dem beliebige Schaummengen innerhalb der Kapazitätsgrenze des Behälters abgegeben werden könne. Obwohl der Einkomponentenschaum bequem und vorteilhaft verarbeitet werden kann—er kann beispielsweise ohne Wägen und Mischen der Druckdose entnommen werden—besitzt auch dieses Verfahren gewisse Nachteile Nachteilig ist beispielsweise, daß die in der DE—OS 20 45 852 beschriebene Polyurethanmischung nur eine begrenzte Lagerstabilität besitzt, die Viskosität der Mischung relativ rasch ansteigt und sich der Doseninhalt bei längerer Lagerung verfestigt. Nachteilig ist ferner, daß die aufgeschäumte Polyurethanmischung mit der Atmosphäre relativ langsam reagiert und aushärtet, so daß der Polyurethanschaum nachblähen kann. Dies kann zu Deformationen an eingeschäumten Objekten, beispielsweise an Türzargen oder Fensterrahmen, führen.

Aufgabe der vorliegenden Erfindung war die Entwicklung von formstabilen Polyurethanschaumstoffen, wobei die schaumfähige Polyurethanmischung mindestens 18 Monate bei Raumtemperatur lagerstabil sein sollte, in einem einzigen Behälter gelagert und durch Entspannung augfeschäumt werden sollte.

Diese Aufgabe wurde gelöst durch ein Verfahren zur Herstellung von formstabilen Polyurethanschaumstoffen durch Entspannen und Aushärtenlassen mit der Atmosphäre, vorzugsweise Luftfeuchtigkeit, eines lagerstabilen, unter Druck stehenden Gemisches aus isocyanatgruppenhaltigen Präpolymeren auf Basis von Polyolen und organischen Polyisocyanaten, Treibmitteln und gegebenenfalls Hilfs- und Zusatzstoffen, das dadurch gekennzeichnet ist, daß man als Polyole tertiäre Aminogruppen in der Polymerkette gebunden enthaltende di- bis octafunktionelle Polyester- und/oder Polyätherpolyole mit einer Hydroxylzahl von 40 bis 500 oder Mischungen aus solchen tertiäre Aminogruppen enthaltenden Polyester- und/oder Polyätherpolyolen mit stickstofffreien Polyester- und/oder Polyätherpolyolen verwendet.

Durch die erfindungsgemäße Umsetzung der polyfunktionellen stickstoffhaltigen Polyester- und/oder Polyätherpolyole und vorzugsweise der Mischungen aus polyfunktionellen stickstoffhaltigen und stickstofffreien Polyester- und/oder Polyätherpolyolen mit organischen Polyisocyanaten erhält man isocyanatgruppenhaltige Präpolymere, die nach dem Aufschäumen mit der Atmosphäre rasch reagieren und zu formstabilen Polyurethanschaumstoffen aushärten.

Da die schaumfähigen Mischungen erfindungsgemäß keine üblichen niedermolekularen monomeren Polyurethankatalysatoren, beispielsweise solche mit Molekulargewichten kleiner als 250 g/mol, wie tertiäre Amine, Salze organischer Säuren, organische Zinnverbindung usw., enthalten, sind die Mischungen äußerst, d.h. mehr als 18 Monate, bei Raumtemperatur lagerstabil.

Vorteilhaft ist ferner, daß als Treibmittel neben Fluorchlormethanen, wie Monofluortrichlormethan, Difluormonochlormethan und Difluordichlormethan sowie deren Gemische, auch umweltfreundliche Kohlenwasserstoffe verwendet werden können, wobei vorzugsweise Mischungen aus Fluorchlormethanen und Kohlenwasserstoffen Anwendung finden.

Wie bereits dargelegt wurde, werden die isocyanatgruppenhaltigen Präpolymeren, die einen NCO-Gehalt von 5 bis 25 Gewichtsprozent, vorzugsweise von 10 bis 20 Gewichtsprozent, bezogen auf das Gewicht des Präpolymeren besitzen, durch Umsetzung von vorzugsweise aromatischen Polyisocyanaten mit den erfindungsgemäßen tert.-Aminogruppen enthaltenden Polyolen oder Polyolmischungen hergestellt.

Als aromatische Polyisocyanate seien beispielhaft genannt: Mischungen aus Toluylendiisocyanaten, wie 2,4- und/oder 2,6-Toluylendiisocyanaten und Di- und Polyphenyl-polymethylen-polyisocyanaten (roh-MDI). Vorzugsweise verwendet wird eine Mischung aus Polyphenyl-polymethylen-polyisocyanaten und Diphenylmethan-diisocyanaten (roh-MDI) mit einem Gehalt an Diphenylmethan-diisocyanat-Isomeren von 90 bis 40 Gewichtsprozent, vorzugsweise von 80 bis 50 Gewichtsprozent, bezogen auf das Gesamtgewicht der Mischung.

Als stickstoffhaltige Polyole werden di- bis octafunktionelle, vorzugsweise tri- bis tetrafunktionelle Polyester- und/oder vorzugsweise Polyätherpolyole mit Hydroxylzahlen von 40 bis 500, vorzugsweise von 40 bis 200, verwendet, die mindestens eine, vorzugsweise 1 bis 6 tertiäre Aminogruppen in der Polymerkette gebunden enthalten. Geeignete stickstoffgruppenhaltige Polyesterpolyole, die Molekulargewichte von 500 bis 5 000, vorzugsweise von 1 000 bis 4 000 besitzen, können beispielsweise aus Polycarbonsäuren, vorzugsweise Dicarbonsäuren und Di- und/oder Trialkanolaminen, wie z.B. Di- und/oder Triisopropanolamin, gegebenenfalls im Gemisch mit mehrwertigen Alkoholen oder aus Mischungen von Polyaminen, wie z.B. Äthylendiamin, Diäthylentriamin, N-Methyläthylentriamin und mehrwertigen Alkoholen, hergestellt werden. Genannt seien beispielhaft Polycarbonsäuren, wie Glutarsäure, Sebacinsäure, Phthalsäure, Isophthalsäure, Terephthalsäure, und vorzugsweise Bernsteinsäure und Adipinsäure. Beispiele für mehrwertige Alkohole sind Äthylenglykol, 1,3- und 1,2-Propandiol, 1,4-Butandiol, 1,6-Hexandiol, Diäthylenglykol, Dipropylenglykol, Glycerin, Trimethylolpropan und Pentaerythrit.

Vorzugsweise verwendet werden jedoch stickstoffgruppenhaltige Polyätherpolyole mit Molekulargewichten von 500 bis 5 000, vorzugsweise von 1 000 bis 4 000. Die stickstoffgruppenhaltigen Polyätherpolyole können nach bekannten Verfahren aus einem oder mehreren Alkylenoxiden mit 2 bis 4 Kohlenstoffatomen im Alkylenrest und einem aminogruppenhaltigen Startermolekül, das 2 bis 8, vorzugsweise 3 bis 4, aktive Wasserstoffatome enthält, hergestellt werden. Geeignete Alkylenoxide sind beispielsweise 1,3-Propylenoxid, 1,2- bzw. 2,3-Butylenoxid, Styroloxid und vorzugsweise Äthylenoxid und 1,2-Propylenoxid. Die Alkylenoxide können einzeln, alternierend nacheinander oder als Mischungen verwendet werden. Als aminogruppenhaltige Startermoleküle kommen beispielsweise in Betracht: Ammoniak, Hydrazin, Mono- und Dialkylhydrazine mit 1 bis 6 Kohlenstoffatomen im Alkylrest, Guanidin, gegebenenfalls substituierte Guanidine, gegebenenfalls N-Mono-, N,N- und N,N'-dialkylsubstituierte Diamine mit 1 bis 6 Kohlenstoffatomen im Alkylrest, wie Äthylendiamin, 1,2- und 1,3-Propylendiamin, Butylendiamin, Hexamethylendiamin, 2,4- und 2,6-Toluylendiamin, 4,4'-, 2,4'- und 2,2'-Diaminodiphenylmethan und Aminoalkohole, wie Mono-, Di- un Triäthanolamin. Vorzugsweise verwendet werden als aminogruppenhaltige Startermoleküle Triäthanolamin, Äthylendiamine, Dialkylentriamine, Trialkylentetraamine und niedermolekulare Polyäthylendiamine.

Nach einer anderen Verfahrensvariante können stickstoffgruppenhaltige Polyätherpolyole aus stickstofffreien Startermolekülen, Alkylenoxiden und beispielsweise Dibutylaminoglycidyl hergestellt werden, so daß der Stickstoff nicht in der Polymerhaupt-, sondern der Seitenkette gebunden ist.

Die tertiäre aminogruppenhaltigen, di- bis octafunktionellen Polyester- und Polyätherpolyole können als solche oder in Form von Mischungen verwendet werden.

Als Polyole verwendet werden jedoch vorzugsweise Mischungen aus den oben genannten tertiäre aminogruppenhaltigen, di- bis octafunktionellen Polyester- und/oder Polyätherpolyolen und stickstoffgruppenfreien di- bis octafunktionellen, vorzugsweise tetra- bis trifunktionellen Polyester- und/oder Polyätherpolyolen mit Hydroxylzahlen von 40 bis 500, vorzugsweise von 200 bis 400. Geeignete stickstofffreie Polyesterpolyole besitzen Molekulargewichte von 400 bis 4 000, vorzugsweise von 500 bis 2 000 und können beispielsweise aus den vorgenannten Polycarbonsäuren, vorzugsweise Dicarbonsäuren und mehrwertigen Alkoholen, vorzugsweise Diolen, hergestellt werden.

Vorzugsweise werden jedoch für die erfindungsgemäße Polyolmischung übliche stickstofffreie Polyätherpolyole mit Molekulargewichten von 400 bis 4 000, vorzugsweise von 400 bis 2 000, verwendet. Die Polyätherpolyole werden nach bekannten Verfahren aus einem oder mehreren der oben genannten Alkylenoxiden und einem stickstofffreien Startermolekül hergestellt. Als stickstofffreie Startermoleküle kommen beispielsweise in Betracht: Wasser, Phosphorsäure, Polycarbonsäuren, insbesondere Dicarbonsäure, wie Adipinsäure, Bernsteinsäure, Phthalsäure und Terephthalsäure und vorzugsweise Polyhydroxylverbindungen, wie Äthylenglykol, Propylenglykol, Diäthylenglykol, Pentaerythrit, Sorbit, Sucrose und vorzugsweise Glycerin und Trimethylolpropan. Die stickstofffreien Polyätherpolyole können geradkettig oder verzweigt sein.

Zur Herstellung der volumenstabilen Einkomponenten-Polyurethanschaumstoffe hat es sich als vorteilhaft erwiesen, Polyolmischungen zu verwende, die bestehen aus

3

a) 10 bis 90 Gew.%, vorzugsweise 50 bis 70 Gew.%, bezogen auf das Gesamtgewicht der Polyolmischung, eines di- bis octafunktionellen, mindestens eine tertiäre Aminogruppe in der Polymerkette gebunden enthaltenden Polyester- und/oder Polyätherpolyols mit einer Hydroxylzahl von 40 bis 500 und

b) 90 bis 10 Gew.%, vorzugsweise 50 bis 30 Gewichtsprozent, bezogen auf das Gesamtgewicht der Polyolmischung, eines di- bis octafunktionellen, stickstofffreien Polyester- und/oder Polyätherpolyols mit einer Hydroxylzahl von 40 bis 500.

Zur Herstellung der isocyanatgruppenhaltigen Präpolymeren werden die organischen Polyisocyanate mit dem erfindungsgemäßen stickstoffgruppenhaltigen Polyol bzw. der Polyolmischung bei Temperaturen von 0 bis 100°C, vorzugsweise 20 bis 60°C, in solchen Mengenverhältnissen zur Umsetzung gebracht, daß pro Hydroxylgruppe 2 bis 10, vorzugsweise 4 bis 8 NCO-Gruppen in der Reaktionsmischung vorliegen.

Beim erfindungsgemäßen Verfahren werden als Treibmittel niedrigsiedende Flüssigkeiten verwendet, die rasch verdampfen, wenn das Gemisch entspannt wird und die gegenüber den anderen Bestandteilen des Gemisches inert sind. In Betracht kommen beispielsweise halogenierte Kohlenwasserstoffe mit Siedepunkten unter 50°C, vorzugsweise zwischen −50 und 30°C bei Atmosphärendruck, wie Monochlordifluormethan, Dichlormonofluormethan, Dichlordifluormethan und Trichlorfluormethan und deren Gemische, insbesondere solche aus 30 bis 80 Gew.% Monochlordifluormethan oder Dichlordifluormethan und 70 bis 20 Gew.% Trichlormonofluormethan oder Dichlormonofluormethan, wobei die Gewichtsprozente bezogen sind auf das Gesamtgewicht der Gemische, in Mengen von 20 bis 30 Gew.%, vorzugsweise 23 bis 28 Gew.%, bezogen auf das Gewicht des isocyanatgruppenhaltigen Präpolymeren, und Kohlenwasserstoffe mit Siedepunkten unter 50°C, vorzugsweise zwischen −50 und 30°C bei Atmosphärendruck, wie Propan und insbesondere Isobutan und Dimethyläther in Mengen von 5 bis 25 Gewichtsprozent, vorzugsweise 10 bis 20 Gewichtsprozent, bezogen auf das Gewicht des isocyanatgruppenhaltigen Präpolymeren. Vorzugsweise verwendet werden jedoch Mischungen aus den genannten halogenierten Kohlenwasserstoffen und Kohlenwasserstoffen im Gewichtsverhältnis von 90:10 bis 50:50, vorzugsweise von 90:10 bis 80:20, insbesondere solche aus Dichlordifluormethan und Propan, Isobutan oder Dimethyläther. Die erforderlichen Mengen an Treibmittelmischung lassen sich auf einfache Weise in Abhängigkeit vom Mischungsverhältnis halogenierter Kohlenwasserstoff:Kohlenwasserstoff aus den oben genannten Mengenangaben für die Einzelkomponenten berechnen. Die Treibmittel liegen in dem lagerstabilen, unter Druck stehenden Gemisch praktisch vollständig in flüssiger Form vor.

Der lagerstabilen, schaumfähigen Mischung können gegebenenfalls noch Hilfs- und Zusatzstoffe einverleibt werden. Genannt seien beispielsweise oberflächenaktive Stoffe, Weichmacher, Flammschutzmittel, Porenregler, UV-Absorber, Farbstoffe und Hydrolysenschutzmittel.

In Betracht kommen beispielsweise oberflächenaktive Stoffe, welche zur Unterstützung der Homogenisierung der Ausgangsstoffe dienen und gegebenenfalls auch geeignet sind, die Zellstruktur der Schaumstoffe zu regulieren. Genannt seien beispielhaft Siloxan-Oxyalkylen-Mischpolymerisate und andere Organopolysiloxane, oxäthylierte Alkylphenole, oxäthylierte Fettalkohole, Paraffinöle, Rizinusöl- bzw. Ricinolsäure-Ester und Türkischrotöl, die in Mengen von 0,1 bis 10 Gewichtsprozent, bezogen auf das Gewicht, an isocyanatgruppenhaltigen Präpolymeren, angewandt werden.

Es kann auch vorteilhaft sein, einen Weichmacher in das Reaktionsgemisch einzubeziehen, so daß die Neigung zur Sprodigkeit in den Produkten verringert wird. Es können übliche Weichmachungsmittel verwendet werden, doch ist es besonders zweckmäßig, solche Mittel zu verwende, die Phosphor- und/oder Halogenatome enthalten und dadurch die Flammfestigkeit der Polyurethankunststoffe zusätzlich vergrößern. Zu solchen Mitteln gehören Trikresylphosphat, Tris-2-chloräthylenphosphat, Tris-$\beta$-chlorpropylenphosphat und Tris-2,3-dibrom-propylphosphat.

Außer den bereits genannten halogensubstituierten Phosphaten können als Flammschutzmittel beispielsweise verwendet werden: Chlorparaffine, Halogenphosphite, Ammoniumphosphat und halogen- und phosphorhaltige Harze.

Das lagerstabile, schaumfähige Gemisch aus isocyanatgruppenhaltigen Präpolymeren, Treibmitteln und gegebenenfalls Hilfs- und Zusatzstoffen kann beispielsweise in Masse in Druckkesseln hergestellt und dann in geeignete Behälter unterschiedlicher Größe, beispielsweise Aerosoldosen von 0,25 bis 5 Liter Inhalt oder Druckbehälter mit 50 bis 100 Liter Inhalt, wie sie für industrielle Bereiche üblich sind, abgefüllt werden. Es ist jedoch auch möglich, das isocyanatgruppenhaltige Präpolymere aus Polyisocyanaten und den stickstoffgruppenhaltigen Polyolen oder der Polyolmischung direkt in den entsprechenden Druckbehältern in Gegenwart des Treibmittels herzustellen oder das Treibmittel nachträglich in das Druckgefäß einzubringen.

Zur Herstellung des formstabilen Polyurethanschaumstoffes wird das lagerstabile, unter Druck stehende Gemisch aus isocyanatgruppenhaltigem Präpolymeren, Treibmittel und gegebenenfalls Hilfs- und Zusatzstoffen auf Atmosphärendruck mit Hilfe einer geeigneten Vorrichtung, beispielsweise einem Ventil, entspannt. Bei Wegnahme des Druckes schäumt das Gemisch auf und härtet rasch durch Reaktion mit der Atmosphäre, insbesondere dem in der Atmosphäre enthaltenen Wasserdampf. Durch die Verwendung der erfindungsgemäßen stickstoffgruppenhaltigen Polyole oder Polyolmischung wird rasch ein relativ druck- und formstabiler geschlossenzelliger Polyurethanschaum erhalten. Ein Nach-

4

blähen des Schaumstoffes aufgrund von Diffusionsvorgängen von Treibmittel, Luft und des bei der Aushärtung entstehenden Kohlendioxids kann dadurch, insbesondere bei Verwendung von Treibmittelmischungen aus halogenierten Kohlenwasserstoffen und Kohlenwasserstoffen praktisch vollständig unterdrückt werden.

Die erfindungsgemäßen lagerstabilen, schaumfähigen Gemische können zur Herstellung von formstabilen Einkomponenten Polyurethanschaumstoffen verwendet werden, die als Dichtungsmittel, Ritzenfüller, Isolationsmaterialien u.a. dienen können.

Die Erfindung wird durch die folgenden Beispiele erläutert. Die in den Beispielen genannten Teile beziehen sich auf das Gewicht.

Beispiele 1 bis 20 und Vergleichsbeispiele A bis B

Die in den folgenden Tabellen zusammengefaßten Ausgangsstoffe werden in den genannten Mengen (Teilen) in einen Druckbehälter, ausgestattet mit einem Sicherheitsventil, bei Raumtemperatur eingebracht und intensiv gemischt. Durch Entspannen läßt man die reaktionsfähige Mischung aufschäumen.

TABELLE 1

| Beispiel | | 1 | 2 | 3 | 4 | 5 |
|---|---|---|---|---|---|---|
| Einsatzstoffe | Molgew. (g/mol) | | | | | |
| oxpropyliertes Glyzerin | 720 | | | | 20 | |
| oxpropyliertes Glyzerin | 1 500 | | | | | |
| oxpropyliertes Trimethylolpropan | 400 | | | | | |
|  | 430 | 25 | 25 | 25 | | |
|  | 3 450 | | | | | 45 |
| oxypropyliertes Triäthanolamin | 720 | | | | | |
|  | 1 500 | | | | 80 | |
|  | 3 400 | | 43 | | | |
| oxpropyliertes Äthylendiamin | 3 750 | 43 | | | | |
| oxpropyliertes Glyzerin mit N,N-Dibutylglycidylamin | 4 000 | | | | | |
|  | 4 200 | | | 43 | | |
|  | 4 800 | | | | | |
| Polyester aus Adipinsäure, Äthylenglykol, Di-, Triäthanolamin | 640 | | | | | 15 |
|  | 2 000 | | | | | |
|  | 4 500 | | | | | |
| Roh-MDI | | 150 | 150 | 150 | 120 | 150 |
| Tris-2-chloräthylphosphat | | 25 | 25 | 25 | 25 | 25 |
| Siloxan-oxalkylen-Mischpolymerisat | | 6 | 6 | 6 | 6 | 6 |
| N,N-Dimethylcyclohexylamin | | | | | | |
| Monofluortrichlormethan | | | | | | |
| Difluordichlormethan | | 50 | 50 | 50 | 50 | 50 |
| Monofluordichlormethan | | | | | | |
| Difluormonochlormethan | | | | | | |
| Dimethyläther | | | | 12 | 12 | 12 |
| iso-Butan | | 15 | | | | |
| Propan | | | 15 | | | |
| **Eigenschaften** | | | | | | |
| Dichte des Hartschaums (kg/m³) | | 20 | 20 | 25 | 35 | 30 |
| Abbindezeit (Stunden) | | 2 | 2 | 2 | 3 | 3 |
| Durchhärtezeit (Stunden) | | 5 | 5 | 5 | 6 | 8 |
| Lagerstabilität bei 60°C (Tage) | | >60 | >60 | >60 | >60 | >60 |
| Nachblähen einer Sandwichprobe[+] (%) | | 0—10 | 0—10 | 0—10 | 0—5 | 0—5 |

[+]Blechstreifen: Länge 20 cm, Breite 5 cm, Abstand der Bleche $I_o$ 3 cm, maximaler oder minimaler Abstand der Bleche I, $\% = [(I - I_o)I_o] \cdot 100$ (22°C, 60% Luftfeuchtigkeit)

TABELLE 2

| Beispiel | | 6 | 7 | 8 | 9 | 10 |
|---|---|---|---|---|---|---|
| Einsatzstoffe | Molgew. (g/mol) | | | | | |
| oxpropyliertes Glyzerin | 720 | | | | | |
| oxpropyliertes Glyzerin | 1 500 | | | | | |
| oxpropyliertes Trimethylolpropan | 400 | | | | | 20 |
| | 430 | 25 | 15 | | | |
| | 3 450 | | | | | |
| oxpropyliertes Triäthanolamin | 720 | | | 40 | | |
| | 1 500 | | | | 100 | |
| | 3 400 | | | | | |
| oxpropyliertes Äthylendiamin | 3 750 | 43 | | | | |
| oxpropyliertes Glyzerin mit N,N-Dibutylglycidylamin | 4 000 | | | | | 80 |
| | 4 200 | | | | | |
| | 4 800 | | | | | |
| Polyester aus Adipin- säure, Äthylenglykol, Di-, Triäthanolamin | 640 | | | | | |
| | 2 000 | | | | | |
| | 4 500 | | 53 | | | |
| Roh-MDI | | 150 | 150 | 120 | 150 | 150 |
| Tris-2-chloräthylphosphat | | 25 | 25 | 25 | 25 | 25 |
| Siloxan-oxalkylen- Mischpolymerisat | | 6 | 6 | 6 | 6 | 6 |
| N,N-Dimethylcyclohexylamin | | | | | | |
| Monofluortrichlormethan | | | | 42 | | |
| Difluordichlormethan | | 42 | 42 | | | |
| Monofluordichlormethan | | 42 | 42 | | | |
| Difluormonochlormethan | | | | 42 | 80 | 50 |
| Dimethyläther | | | | | | 12 |
| iso-Butan | | | | | | |
| Propan | | | | | | |
| **Eigenschaften** | | | | | | |
| Dichte des Hartschaums (kg/m$^3$) | | 20 | 25 | 30 | 25 | 30 |
| Abbindezeit (Stunden) | | 2 | 3 | 2 | 2 | 1 |
| Durchhärtezeit (Stunden) | | 5 | 5 | 6 | 5 | 6 |
| Lagerstabilität bei 60°C (Tage) | | >60 | >60 | >60 | >60 | >60 |
| Nachblähen einer Sandwichprobe[+] (%) | | 0—10 | 0—5 | 0—5 | 0—10 | 0—10 |

[+]Blechstreifen: Länge 20 cm, Breite 5 cm, Abstand der Bleche $l_o$ 3 cm, maximaler oder minimaler Abstand der Bleche l, %=[(l—$l_o$)/$l_o$] . 100 (22°C, 60% Luftfeuchtigkeit)

TABELLE 3

| Beispiel | | 11 | 12 | 13 | 14 | 15 |
|---|---|---|---|---|---|---|
| Einsatzstoffe | Molgew. (g/mol) | | | | | |
| oxpropyliertes Glyzerin | 720 | | | | | |
| oxpropyliertes Glyzerin | 1 500 | | | | | |
| oxpropyliertes | 400 | 10 | | | 25 | 25 |
| Trimethylolpropan | 430 | | 25 | 25 | | |
| | 3 450 | | | | | |
| oxpropyliertes | 720 | | | | | |
| Triäthanolamin | 1 500 | | | | | |
| | 3 400 | | | | | |
| oxpropyliertes Äthylendiamin | 3 750 | | | | 43 | |
| oxpropyliertes | 4 000 | 90 | | | | |
| Glyzerin mit | 4 200 | | 43 | | | |
| N,N-Dibutylglycidylamin | 4 800 | | | 43 | | 43 |
| Polyester aus Adipin- | 640 | | | | | |
| säure, Äthylenglykol, | 2 000 | | | | | |
| Di-, Triäthanolamin | 4 500 | | | | | |
| Roh-MDI | | 150 | 150 | 150 | 150 | 150 |
| Tris-2-chloräthylphosphat | | 25 | 25 | 25 | 25 | 25 |
| Siloxan-oxalkylen-Mischpolymerisat | | 6 | 6 | 6 | 6 | 6 |
| N,N-Dimethylcyclohexylamin | | | | | | |
| Monofluortrichlormethan | | | 42 | | 42 | |
| Difluordichlormethan | | 50 | | 50 | 42 | |
| Monofluordichlormethan | | | | | | |
| Difluormonochlormethan | | | 42 | | | 50 |
| Dimethyläther | | 12 | | | | |
| iso-Butan | | | | | | 15 |
| Propan | | | | 15 | | |
| Eigenschaften | | | | | | |
| Dichte des Hartschaums (kg/m$^3$) | | 25 | 25 | 25 | 25 | 30 |
| Abbindezeit (Stunden) | | 1 | 2 | 2 | 3 | 1 |
| Durchhärtezeit (Stunden) | | 6 | 8 | 5 | 6 | 6 |
| Lagerstabilität bei 60°C (Tage) | | 60 | 60 | 60 | 60 | 60 |
| Nachblähen einer Sandwichprobe[+] (%) | | 5—10 | 5—10 | 0—5 | 0—10 | 0—10 |

[+]Blechstreifen: Länge 20 cm, Breite 5 cm, Abstand der Bleche $I_o$ 3 cm, maximaler oder minimaler Abstand der Bleche I, %=[(I—$I_o$)/$I_o$] . 100 (22°C, 60% Luftfeuchtigkeit)

# 0 002 768

TABELLE 4

| Beispiel | Molgew (g/mol) | 16 | 17 | 18 | 19 | 20 | A | B |
|---|---|---|---|---|---|---|---|---|
| Einsatzstoffe | | | | | | | | |
| oxpropyliertes Glyzerin | 720 | | 20 | | | | 40 | |
| oxpropyliertes Glyzerin | 1 500 | | | | | | | 100 |
| oxpropyliertes Trimethylolpropan | 400 430 3 450 | | | 25 | 15 | 45 | | |
| oxpropyliertes Triäthanolamin | 720 1 500 3 400 | | | | | | | |
| oxpropyliertes Äthylendiamin | 3 750 | | | 43 | | | | |
| oxpropyliertes Glyzerin mit N,N-Dibutylglycidylamin | 4 000 4 200 4 800 | | | | | | | |
| Polyester aus Adipin-säure, Äthylenglykol, | 640 2 000 | 100 | 80 | | | 20 | | |
| Di-, Triäthanolamin | 4 500 | | | | 53 | | | |
| Roh-MDI | | 150 | 120 | 150 | 150 | 150 | 120 | 150 |
| Tris-2-chloräthylphosphat | | 25 | 25 | 25 | 25 | 25 | 25 | 50 |
| Siloxan-oxalkylen-Mischpolymerisat | | 6 | 6 | 6 | 6 | 6 | 2 | 2 |
| N,N-Dimethylcyclohexylamin | | | | | | | 0,6 | 0,6 |
| Monofluortrichlormethan | | | | | | 42 | 30 | |
| Difluordichlormethan | | 50 | 50 | 90 | 50 | 42 | 90 | 150 |
| Monofluordichlormethan | | | | | | | | |
| Difluormonochlormethan | | | | | | | | |
| Dimethyläther | | | | | 12 | | | |
| iso-Butan | | 15 | | | | | | |
| Propan | | | 15 | | | | | |
| Eigenschaften | | | | | | | | |
| Dichte des Hartschaums (kg/m³) | | 25 | 30 | 35 | 20 | 30 | 30 | 35 |
| Abbindezeit (Stunden) | | 3 | 2 | 1 | 1 | 2 | 1 | 5 |
| Durchhärtezeit (Stunden) | | 6 | 8 | 5 | 6 | 5 | 10 | 10 |
| Lagerstabilität bei 60°C (Tage) | | 60 | 60 | 60 | 60 | 60 | 14 | 14 |
| Nachblähen einer Sandwichprobe[+] (%) | | 5—10 | 5—10 | 0—10 | 0—5 | 0—5 | 5—15 | 5—15 |

[+]Blechstreifien: Länge 20 cm, Breite 5 cm, Abstand der Bleche $l_o$ 3 cm, maximaler oder minimaler Abstand der Bleche $l$, %=$[(l-l_o)/l_o \cdot 100]$ (22°C, 60% Luftfeuchtigkeit)

**Patentansprüche**

1. Verfahren zur Herstellung von formstabilen Einkomponenten-Polyurethanschaumstoffen durch Entspannen und Aushärten mit der Atmosphäre, vorzugsweise Luftfeuchtigkeit, eines lagerstabilen, unter Druck stehenden, Treibmittel enthaltenden Gemisches aus isocyanatgruppenhaltigen Präpolymeren auf Basis von Polyolen und organischen Polyisocyanaten, dadurch gekennzeichnet, daß man als Polyole tertiäre Aminogruppen in der Polymerkette gebunden enthaltende di- bis octafunktionelle Polyester- und/oder Polyätherpolyole mit einer Hydroxylzahl von 40 bis 500 oder Mischungen aus solchen tertiäre Aminogruppen enthaltenden Polyester- und/oder Polyätherpolyolen mit stickstofffreien Polyester- und/oder Polyätherpolyolen verwendet.

2. Verfahren nach Anspruch 1, dadurch gekennzeichnet, daß man als Polyole Mischungen aus

a) 90 bis 10 Gew.% eines tertiäre Aminogruppen in der Polymerkette gebunden enthaltenden di-bis octafunktionellen Polyester- und/oder Polyätherpolyoles mit einer Hydroxylzahl von 40 bis 500 und

b) 10 bis 90 Gew.% eines di- bis octafunktionellen Polyester- und/oder Polyätherpolyols mit einer Hydroxylzahl von 40 bis 500 verwendet, wobei die Gewichtsprozente bezogen sind auf das Gesamtgewicht der Polyolmischung.

3. Verfahren nach Anspruch 1, dadurch gekennzeichnet, daß das isocyanatgruppenhaltige Präpolymere einen NCO-Gehalt von 5 bis 25 Gewichtsprozent, bezogen auf das Gewicht des Präpolymeren, hat.

4. Verfahren nach Anspruch 1, dadurch gekennzeichnet, daß als Treibmittel Mischungen aus Dichlordifluormethan und Isobutan, Propan oder Dimethyläther verwendet werden.

5. Verfahren nach Anspruch 4, dadurch gekennzeichnet, daß das Treibmittelgemisch aus 50 bis 90 Gewichtsprozent Dichlordifluormethan und 50 bis 10 Gewichtsprozent Isobutan, Propan oder Dimethyläther besteht, wobei die Gewichtsprozente bezogen sind auf das Gesamtgewicht der Treibmittelmischung.

6. Verfahren nach Anspruch 1, dadurch gekennzeichnet, daß das Treibmittel praktisch vollständig in flüssiger Form vorliegt.

7. Verfahren gemäß Anspruch 1, dadurch gekennzeichnet, daß die Umsetzung in Abwesenheit von bekannten, niedermolekularen Polyurethankatalysatoren durchgeführt wird.

8. Verfahren gemäß Anspruch 1, dadurch gekennzeichnet, daß man das lagerstabile Gemisch aus isocyanatgruppenhaltigen Präpolymeren, Treibmittel und gegebenenfalls Hilfs- und Zusatzstoffen in einem Druckbehälter unter einem solchen Druck herstellt, daß das Treibmittel praktisch vollständig in flüssiger Form vorliegt, das Gemisch durch Entspannen aufschäumen und durch Umsetzung mit der Atmosphäre aushärten läßt.

**Revendications**

1. Procédé de préparation de mousses de polyuréthanne à un composant dimensionnellement stables par expansion d'un mélange de pré-polymères à groupes isocyanate à base de polyols et de polyisocyanates organiques et d'agents d'expansion sous pression, stable au stockage, suivie d'un durcissement à l'air atmosphérique et surtout à l'humidité atmosphérique, caractérisé en ce que l'on emploie comme polyols des polyester- et(ou) polyéther-polyols di- à octa-fonctionnels, contenant des groupes amino tertiaires liés dans la chaîne polymère, avec un indice d'oxhydryle de 40 à 500 ou des mélanges de tels polyester- et(ou) polyéther-polyols à groupes amino tertiaires et de polyester- et(ou) polyéther-polyols exempts d'azote.

2. Procédé suivant la revendication 1, caractérisé en ce que l'on emploie en tant que polyols des mélanges

a) de 90 à 10% en poids d'un polyester- et(ou) polyéther-polyol di- à octa-fonctionnel, contenant des groupes amino tertiaires liés dans la chaîne polymère, d'un indice d'oxhydryle de 40 à 500 et

b) de 10 à 90% en poids d'un polyester et(ou) polyéther-polyol di-à octa-fonctionnel d'un indice d'oxhydryle de 40 à 500, ces pourcentages se rapportant au poids total du mélange de polyols.

3. Procédé suivant la revendication 1, caractérisé en ce que le pré-polymère à groupes isocyanate possède une teneur en groupes —NCO de 5 à 25% de son poids.

4. Procédé suivant la revendication 1, caractérisé en ce que les agents d'expansion (mélanges porogènes) sont des mélanges de dichloro-difluoro-méthane et d'isobutane, de propane ou d'éther diméthylique.

5. Procédé suivant la revendication 4, caractérisé en ce que le mélange porogène est un mélange de 50 à 90% en poids de dichloro-difluoro-méthane et de 50 à 10% en poids d'isobutane, de propane ou d'éther diméthylique, ces pourcentages se rapportant au poids total du mélange d'expansion.

6. Procédé suivant la revendication 1, caractérisé en ce que l'agent d'expansion est pratiquement complètement à l'état liquide.

7. Procédé suivant la revendication 1, caractérisé en ce que la préparation est réalisée sans l'utilisation d'un des catalyseurs à bas poids moléculaire connus pour la préparation de polyuréthannes.

8. Procédé suivant la revendication 1, caractérisé en ce que l'on prépare un mélange stable au stockage de pré-polymères à groupes isocyanate, d'agents porogènes et d'additifs et(ou) d'adjuvants

**0 002 768**

éventuels dans un réservoir résistant aux pressions sous une pression suffisante pour maintenir l'agent porogène pratiquement totalement à l'état liquide, ce mélange étant ensuite expansé en le détendant et laissé durcir par contact avec l'air atmosphérique.

**Claims**

1. A process for the manufacture of dimensionally stable polyurethane foams by releasing, and curing by interaction with the atmosphere, preferably with atmospheric moisture, a storage-stable mixture, which contains blowing agents and is under pressure, of prepolymers which contain isocyanate groups and are based on polyols and organic polyisocyanates, wherein the polyols used are difunctional to octafunctional polyester-polyols and/or polyether-polyols which have a hydroxyl number of from 40 to 500 and contain chemically bonded tertiary amino groups in the polymer chain, or mixtures of such polyester-polyols and/or polyether-polyols, containing tertiary amino groups, with nitrogen-free polyester-polyols and/or polyether-polyols.

2. A process as claimed in claim 1, wherein the polyols used are mixtures of
   a) from 90 to 10% by weight of a difunctional to octafunctional polyester-polyol and/or polyether-polyol which has a hydroxyl number of from 40 to 500 and contains chemically bonded tertiary amino groups in the polymer chain, and
   b) from 10 to 90% by weight of a difunctional to octafunctional polyester-polyol and/or polyether-polyol which has a hydroxyl number of from 40 to 500, the percentages by weight being based on the total weight of the polyol mixture.

3. A process as claimed in claim 1, wherein the prepolymer containing isocyanate groups has an NCO content of from 5 to 25 per cent by weight, based on the weight of the prepolymer.

4. A process as claimed in claim 1, wherein the blowing agents used are mixtures of dichlorodifluoromethane and isobutane, propane or dimethyl ether.

5. A process as claimed in claim 4, wherein the blowing agent mixture comprises from 50 to 90 per cent by weight of dichlorodifluoromethane and from 50 to 10 per cent by weight of isobutane, propane or dimethyl ether, the percentages by weight being based on the total weight of the blowing agent mixture.

6. A process as claimed in claim 1, wherein the blowing agent is virtually completely in the liquid form.

7. A process as claimed in claim 1, wherein the reaction is carried out in the absence of conventional low molecular weight polyurethane catalysts.

8. A process as claimed in claim 1, wherein a storage-stable mixture of prepolymers, containing isocyanate groups, and blowing agents, with or without assistants and additives, is prepared in a pressure vessel under a pressure such that the blowing agent is virtually completely in the liquid form, and the mixture is released to allow it to foam up, and is allowed to cure by interaction with the atmosphere.